Europäisches Patentamt

European Patent Office

Office européen des brevets

(19)

(11) Veröffentlichungsnummer : **0 148 339**
**B1**

(12) # EUROPÄISCHE PATENTSCHRIFT

(45) Veröffentlichungstag der Patentschrift :
07.09.88

(51) Int. Cl.⁴ : **G 05 B 19/405, G 06 F 15/62**

(21) Anmeldenummer : **84112610.5**

(22) Anmeldetag : **19.10.84**

(54) Schaltungsanordnung für die Grafikeinheit eines Mikroprozessorsystems.

(30) Priorität : **08.12.83 DE 3344350**

(43) Veröffentlichungstag der Anmeldung :
**17.07.85 Patentblatt 85/29**

(45) Bekanntmachung des Hinweises auf die Patenterteilung : **07.09.88 Patentblatt 88/36**

(84) Benannte Vertragsstaaten :
**AT CH DE FR GB IT LI NL SE**

(56) Entgegenhaltungen :
**EP-A- 0 083 836**
**EP-A- 0 089 562**
**EP-A- 0 117 614**
**EP-A- 0 144 585**
**GB-A- 2 140 937**

(73) Patentinhaber : **Dr. Johannes Heidenhain GmbH
Nansenstrasse 17
D-8225 Traunreut (DE)**

(72) Erfinder : **Kranitzky, Walter, Dr.
Schierghoferstrasse 20
D-8220 Traunstein (DE)**

## Beschreibung

Die Erfindung bezieht sich auf eine Schaltungsanordnung nach dem Oberbegriff des Anspruchs 1.

Es ist bekannt, Werkstücke am Bildschirm von Computereinrichtungen mehrdimensional darzustellen. Zur perspektivischen Darstellung ist dazu ein hoher rechnerischer und apparativer Aufwand erforderlich.

Bei einfachen Mikroprozessorsystemen ist wegen der eingeschränkten Möglichkeiten bisher nur eine mit Mängeln behaftete Darstellungsweise bekannt geworden, wie sie beispielsweise in der EP-A2-0 089 561 und der EP-A2-0 089 562 beschrieben worden ist.

In der EP-A2-0 144 585 ist ein Verfahren zur Ermittlung einer resultierenden Kontur zum Zwecke der Darstellung eines mittels NC-Maschinen bearbeiteten Werkstückes beschrieben. Dieses Dokument fällt allerdings unter Art. 54 (3) EPÜ.

Bei mikroprozessorgesteuerten numerischen Werkzeugmaschinen ist es vorteilhaft, bereits bei der Programmerstellung die Richtigkeit der Programmierung überprüfen zu können, und zwar anhand der Darstellung des bearbeiteten Werkstückes. Der Ablauf eines Assemblerprogrammes zur Ermittlung der Abbildung dauert jedoch noch relativ lange.

Aus der EP-A2-0 083 836 ist ein Verfahren bekannt, mit dem die Verfahrbewegungen einer NC-Maschine aufgrund von Bearbeitungsdaten dargestellt werden können, wobei die Daten von einer externen Station vorgegeben werden. Diese Druckschrift weist bereits eine Adressierlogik für einen Bildpunktspeicher auf und ist mit einer Ablaufsteuerung zusammengeschaltet.

Der Erfindung liegt die Aufgabe zugrunde, bei rechnergesteuerten Einrichtungen die grafische Darstellung von Gebilden auf einfache Weise und schnell zu ermöglichen.

Diese Aufgabe wird durch eine Schaltungsanordnung gemäß dem Anspruch 1 gelöst.

In den Unteransprüchen finden sich besonders vorteilhafte Ausgestaltungen der Erfindung.

Die besonderen Vorteile der Erfindung liegen darin, daß die Verarbeitungsgeschwindigkeit durch die Schaltung um ein bis zwei Größenordnungen höher ist, als bei einem entsprechenden Assemblerprogramm.

Des weiteren läßt sich die Schaltung in besonders vorteilhafter Weise zusammen mit anderen Bausteinen zum Aufbau eines Grafik-Controllers in einem Schaltkreis integrieren.

Mit der Erfindung ist es möglich, die Wirkung des Werkzeuges auf das Werkstück in Echtzeit dreidimensional am Bildschirm darzustellen.

Die Schaltungsanordnung dient zur Ermittlung der resultierenden Außen- oder Innenkontur von mehreren, in einem Bildpunktspeicher überlagerten Polygonzügen, die Schnitte eines bearbeiteten Werkstückes darstellen.

Anhand der Zeichnungen soll mit Hilfe eines Ausführungsbeispieles die Erfindung noch näher erläutert werden.

Es zeigen

Figur 1  eine Schaltung für einen Grafik-Steuerbaustein,

Figur 2  eine Skizze für die Ermittlung einer Außenkontur mit einer Schaltung nach Figur 1 und

Figur 3  eine Skizze für die Ermittlung einer Innenkontur mit einer Schaltung nach Figur 1.

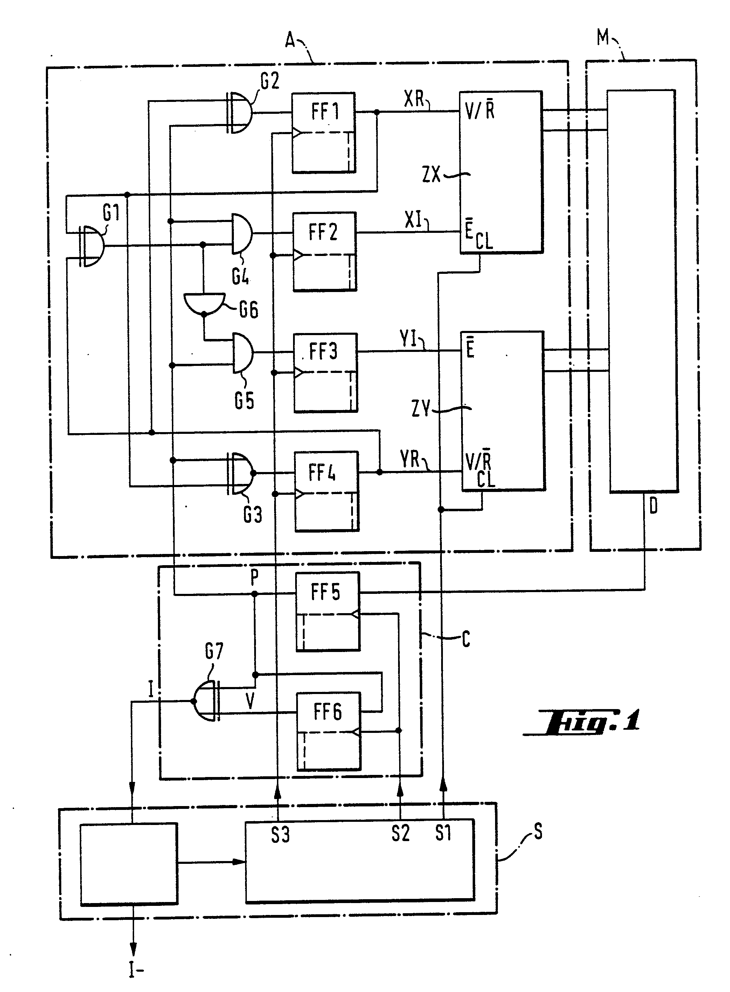

Die in Figur 1 gezeigte Schaltung weist einen Bildpunktspeicher M auf, in dem programmgemäß die Konturen von Schnitten eines bearbeiteten Werkstückes Punkt für Punkt abgespeichert und überlagert sind. Diese Bildpunkte werden auch Pixel genannt und jedes einzelne Pixel ist durch die Adresse seines Bildpunktspeicherplatzes im Bildpunktspeicher M anwählbar.

Durch die Adressierlogik A ist jeder Bildpunktspeicherplatz adressierbar. Die Adressierlogik weist zwei Vorwärts-/Rückwärtszähler ZX und ZY auf, die von bistabilen Kippschaltungen (Flip-Flops) FF1 bis FF4 angesteuert werden, deren Eingangssignale von einem logischen Netzwerk G1 bis G6 geliefert werden, das Informationen aus dem Bildpunktspeicher M und von FF1 und FF4 erhält.

Die Zähler ZX und ZY sind in nicht dargestellter Weise derart mit einem Steuerrechner verbunden, daß die Adressinformation der Eckpunkte abgefragt werden kann.

FF1 bis FF4 speichern Variable, G1 bis G6 bilden die Verknüpfungslogik.

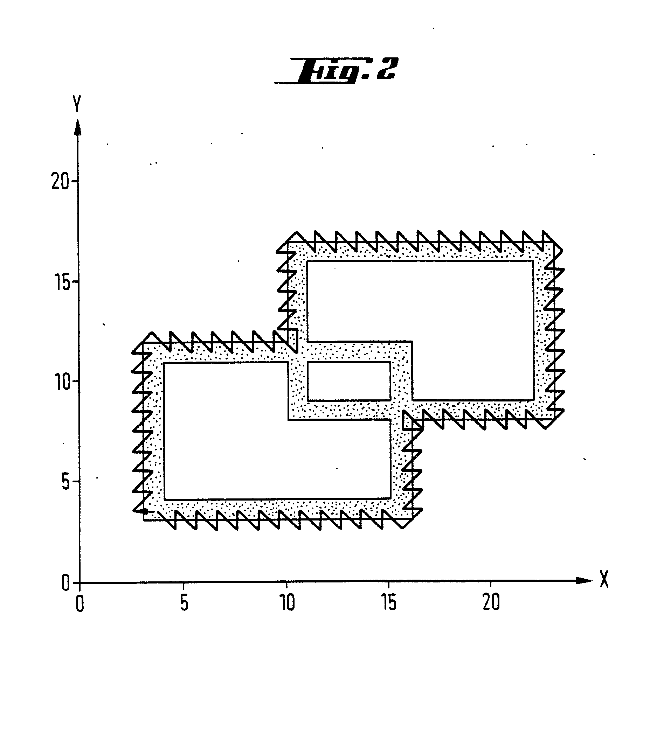

Um aus einer Darstellung mehrerer sich überschneidender Konturen — wie sie in Figur 2 skizziert ist — die resultierende Außenkontur zu ermitteln, werden die Anfangskoordinaten $X = 3$, $Y = 3$ in die Adresszähler ZX und ZY eingespeist. Ferner wird die Zählrichtung zum nächsten zu testenden Bildpunkt aus dem Verlauf der Konturen bestimmt und die Flip-Flops FF1 bis FF4 eingespeist. Der nächste zu testende Bildpunkt hat gemäß Figur 2 die Koordinaten (Adresse) $X = 2$, $Y = 3$.

Damit die Schaltung die Zähler ZX und ZY, ausgehend von einem Startpunkt, so ansteuern kann, daß der adressierte Bildpunkt einer Linie in X- oder Y-Richtung folgen kann, sind folgende logische Bedingungen zu erfüllen.

$$XR_{n+1} = YR_n \oplus P_n \tag{1}$$

$$YR_{n+1} = \overline{XR_n \oplus P_n} \tag{2}$$

$$XI_{n+1} = (XR_n \oplus YR_n) \cdot P_n \tag{3}$$

2

$$YI_{n+1} = \overline{(XR_n \oplus YR_n) \cdot P_n} \tag{4}$$

XR, YR sind dabei Variable für die Zählrichtung (1 = vorwärts, 0 = rückwärts). XI, YI stellen Zählersperrsignale (1 = Zähler ändert sich nicht, 0 = Zählrichtung gemäß XR, YR) dar. $P_n$ ist der Inhalt einer Speicherzelle, also eines Bildpunktspeicherplatzes, der nach dem durch $XR_n$, $YR_n$, $XI_n$ und $YI_n$ gesteuerten Zählvorgang adressiert wird. Von den sechzehn möglichen Kombinationen der Variablen XR, XI, YR, YI sind nur acht erlaubt. Sie genügen zur Festlegung der Zählweise nach links, rechts, oben, unten und in die Richtung der Diagonalen. Die Gleichungen (1)-(4) führen nicht aus der erlaubten Kombinationsklasse heraus. Beim Initialisieren der Variablen ist zu beachten, daß eine erlaubte Kombination gewählt wird. Folgende Gleichungen legen erlaubte Kombinationen fest :

$$XR = YR \quad \text{für} \quad XI = 1 \tag{5}$$

$$YR = \overline{XR} \quad \text{für} \quad YI = 1 \tag{6}$$

Die obige Verknüpfungsvorschrift (1)-(4) ist rekursiv. Sie läßt sich daher von den vier Flip-Flops FF1 bis FF4 als Variablenspeicher und dem rückgekoppelten Verknüpfungsnetzwerk G1 bis G6 ausführen.

FF1-FF4 speichern die Variablen XR, XI, YI und YR. G1-G6 bilden die Verknüpfungslogik. Die Ausgänge XR und YR sind mit den Vorwärts- /Rückwärts-Eingängen der beiden Adresszähler ZX und ZY verbunden. Die Sperrsignale XI und YI sind mit den $\overline{\text{count enable}}$-Eingängen $\bar{E}$ der Zähler ZX und ZY verbunden. Die vier Variablen legen fest, ob und in welcher Richtung die Zähler ZX und ZY beim darauffolgenden Clock-Impuls zählen, der über die Leitung S1 von der Ablaufsteuerung S geliefert wird. In FF5 wird der Zustand (Pixel gesetzt oder gelöscht) des gerade adressierten Bildelements gespeichert. Der Ausgang von FF5 liefert somit das Signal P.

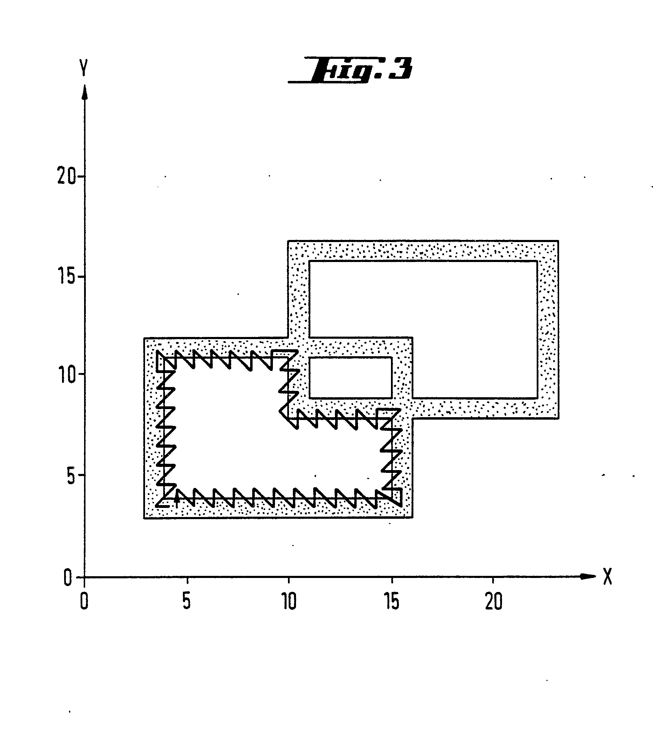

Die Clock-Eingänge der Zähler ZX und ZY, von FF5 und von FF1-FF4 werden durch die Signale S1-S3 von einer Ablaufsteuerung zyklisch angesteuert. Dabei müssen die Laufzeiten durch die einzelnen Bauelemente, set-up Zeiten und die Speicherzugriffszeit berücksichtigt werden. FF6 dient schließlich, zusammen mit G7, zur Erzeugung eines Interupt-Signals I beim Erreichen eines Eckpunkts. Aus Figur 2 und 3 wird ersichtlich, daß die in FF5 eingespeicherten Signale P des Bildpunktspeicherinhalts stets abwechselnd die Werte 0, 1, 0, 1 usw. annehmen, solange man sich auf einer geraden Linie befindet. Aus der Zählrichtung definiert sich die Bezeichnung der ermittelten Ecke : Ist rechts von der geraden Linie ein Pixel gesetzt, spricht man von einer Rechts-Ecke, ist links von der geraden Linie ein Pixel gesetzt, hat man eine Links-Ecke erreicht. Beim Erreichen einer Rechts-Ecke wird der Wert 0 zweimal hintereinander in FF5 eingespeichert. Beim Erreichen einer Links-Ecke wird der Wert 1 zweimal hintereinander eingespeichert. Verzögert man nun das Signal P in FF6 um eine Taktperiode von S2 und verknüpft das verzögerte Signal V und das ursprüngliche Signal P mit einer Exklusiv-Oder-Funktion, so nimmt das resultierende Signal I nur dann den Wert 1 an, wenn ein Eckpunkt erreicht ist.

Nach den vorstehenden Bedingungen wird zunächst XR = 0, XI = 0, YR = 1 und YI = 1. Die Anwendung der Verknüpfungsregeln führt zu folgender Tabelle :

| | XR | XI | YR | YI | P | |
|---|---|---|---|---|---|---|
| n | 0 | 0 | 1 | 1 | 0 | |
| n+1 | 1 | 0 | 1 | 0 | 1 | |
| n+2 | 0 | 1 | 1 | 1 | 0 | |
| n+3 | 1 | 0 | 1 | 0 | 1 | |
| n... | 0 | 0 | 1 | 1 | 0) | Rechts-Ecke |
| n... | 1 | 0 | 1 | 0 | 0) | |
| n... | 1 | 0 | 0 | 0 | 1 | |
| n... | 1 | 1 | 1 | 0 | 0 | |
| n... | 1 | 0 | 0 | 0 | 1 | |
| n... | 1 | 1 | 1 | 0 | 0 | |
| n... | 1 | 0 | 0 | 0 | 1) | Links-Ecke |
| n... | 1 | 1 | 1 | 0 | 1) | |
| n+i | 0 | 0 | 1 | 1 | 0 | |

Start der Ablaufsteuerung : Zyklisch wird mit S1 ein Zählimpuls erzeugt, mit S2 die Information aus dem Bildspeicher in FF5 übernommen und mit S3 durch Ansteuern von FF1-FF4 die rekursive Verknüpfung ausgeführt.

Stop der Ablaufsteuerung bei I = 1. Es ist zu beachten, daß die Adresszähler nach dem Erkennen eines Eckpunktes die Eckenkoordinaten nicht exakt wiedergeben. Im Beispiel stehen die Zähler, nachdem I = 1 geworden ist, auf X = 3, Y = 12 ; die Ecke befindet sich jedoch bei X = 3, Y = 11. Die Abweichung um ein Bit kann beim Auslesen der Koordinaten mit einer Addierschaltung korrigiert werden. Es ist auch möglich, durch Einfügen einiger Gatter in die Steuerleitungen XR, YR, XI, YI den Zählerstand in einem Zwischenzyklus der Ablaufsteuerung S entsprechend zu ändern. Danach werden die Koordinaten ausgelesen und der alte Zählerstand wiederhergestellt. Anschließend wird die Ablaufsteuerung S wieder gestartet, beim Erkennen einer Ecke wieder gestoppt usw.

Um ein Abbruchkriterium nach Vollendung eines Umlaufs zu finden, ist es zweckmäßig, die Anfangswerte $X_0$ und $Y_0$ in einen eigenen Speicher einzulesen und ständig durch Exklusiv-Oder-Gatter mit dem aktuellen Zählerstand zu vergleichen (in Figur 1 nicht eingezeichnet). Wird Gleichheit von Zähler und Speicher festgestellt, so sind sämtliche Ecken-Koordinaten des Polygonzuges der Außenkontur an den Mikroprozessor übertragen worden.

Die Ermittlung einer Innenkontur gemäß Figur 3 erfolgt in sinngemäßer Weise, wobei die Anfangskoordinaten und die andere Zählrichtung entsprechend in die Zähler ZX und ZY und die Flip-Flops FF1 bis FF4 eingespeist werden.

Die beschriebene Schaltung kann mit einem eigenen Vektorgenerator, einer refresh-Steuerung für dynamische Speicher, einer Interuptlogik und der Ablaufsteuerung in einem integrierten Schaltkreis zu einem 3D-Grafik-Controller zusammengefaßt werden. Gegenüber der Ausführung des Algorithmus durch ein Assemblerprogramm läßt die Hardware-Lösung eine Steigerung der Verarbeitungsgeschwindigkeit um ein bis zwei Größenordnungen erwarten.

## Patentanspruch

Schaltungsanordnung zur Ermittlung einer resultierenden Kontur mehrerer, in einem Bildpunktspeicher (M) überlagerter Polygonzüge, die Schnitte eines veränderbaren Werkstückes darstellen, bei der der Bildpunktspeicher (M) eingangsseitig mit einer Adressierlogik (A) zum Anwählen der einzelnen Bildpunktspeicherplätze verbunden ist, dadurch gekennzeichnet, daß die Adressierlogik (A) Vorwärts-/Rückwärtszähler (ZX, ZY) für wenigstens zwei Koordinatenrichtungen zur Adressierung von Bildpunktspeicherplätzen und bistabile Kippschaltungen (FF1 ... FF4) enthält, die von einer Ablaufsteuerung (S) zyklisch angesteuert werden, deren Eingangssignale von einem logischen Netzwerk mit Logikbausteinen (G1 bis G6) geliefert werden und daß die Ablaufsteuerung (S) bistabile Kippschaltungen (FF5, FF6) taktet, die in einem Zwischenspeicher (C) enthalten sind, der sowohl mit Logikbausteinen (G2 ... G5) der Adressierlogik (A), als auch mit dem Datenausgang (D) des Bildpunktspeichers (M) derart verbunden ist, daß der Zwischenspeicher (C) in Abhängigkeit von der Information am Datenausgang (D) des Bildpunktspeichers (M) im Zusammenwirken mit der Ablaufsteuerung (S) Daten an die Adressierlogik (A) liefert, mit denen in der Adressierlogik (A) die Adresse für den nächsten anzuwählenden Bildpunktspeicherplatz ermittelt wird.

## Claim

Circuit arrangement for producing a resultant contour from a plurality of superimposed polygon sections in an image point store (M), which represent sections of a variable workpiece, in which the image point store (M) is connected on one side to address logic (A) for selecting the individual image point storage locations, characterized in that the address logic (A) comprises up/down counters (ZX, ZY) for at least two coordinate directions for addressing image point storage locations and bistable flip-flops (FF1 ... FF4), which are cyclically controlled by a sequence control (S) and whose input signals are supplied by a logic network with logic modules (G1 to G6), and in that the sequence control (S) clocks bistable flip-flops (FF5, FF6) which are contained in an intermediate store (C), which is so connected both to logic modules (G2 ...G5) of the address logic (A), and also to the data output (D) of the image point store (M), that the intermediate store (C) supplies data to the address logic (A) in dependence upon the information at the data output (D) of the image point store (M) in cooperation with the sequence control (S), with which supplied data in the address logic (A) is provided the address for the next image point storage location to be selected.

## Revendication

Dispositif de détermination d'un contour résultant de plusieurs tracés polygonaux, superposés dans une mémoire de points d'image (M), qui représentent des coupes d'une pièce modifiable, dans lequel ladite mémoire de points d'image (M) est reliée sur ses entrées à un ensemble logique d'adressage (A)

**0 148 339**

pour le choix des divers emplacements de mémorisation des points d'image, caractérisé par le fait que l'ensemble logique d'adressage (A) comprend des compteurs-décompteurs (ZX, ZY) pour au moins deux directions de coordonnées aux fins d'adressage d'emplacements de mémorisation de points d'image et des bascules bistables (FF1 ... FF4) qui sont attaquées cycliquement par une commande de déroulement de fonctionnement (S) dont les signaux d'entrée sont délivrés par un réseau logique doté de composants logiques (G1 à G6) et que ladite commande de déroulement de fonctionnement (S) cadence des bascules bistables (FF5, FF6) faisant partie d'une mémoire intermédiaire (C) qui est reliée aussi bien à des composants logiques (G2 ... G5) de l'ensemble logique d'adressage (A) qu'à la sortie de données (D) de la mémoire de points d'image (M) d'une façon telle que ladite mémoire intermédiaire (C) fournit à l'ensemble logique d'adressage (A), en fonction de l'information de la sortie de données de la mémoire de points d'image (M) et en coopération avec la commande de déroulement de fonctionnement (S), des données par lesquelles se détermine dans ledit ensemble logique d'adressage l'adresse pour le prochain emplacement de mémorisation de points d'image à adopter.

**Fig. 1**

Fig.2

Fig. 3